# FASCICULE DE BREVET EUROPEEN

(11) **EP 3 538 340 B1**
(45) Date de publication et mention de la délivrance du brevet: **07.07.2021**
(21) Numéro de dépôt: 17804634.8
(22) Date de dépôt: 14.11.2017
(51) Int. Cl.: C08L 77/02, C08L 77/06, C08G 69/40, C08K 5/053, B29C 48/00, C08J 5/18

(54) **COMPOSITION POLYMERE EXTRUDABLE EN OBJET PERMEABLE A LA VAPEUR D'EAU**
ZU EINEM WASSERDAMPFDURCHLÄSSIGEN OBJEKT EXTRUDIERBARE POLYMERZUSAMMENSETZUNG
POLYMER COMPOSITION THAT CAN BE EXTRUDED INTO AN OBJECT THAT IS PERMEABLE TO WATER VAPOUR

(30) Priorité: 14.11.2016 FR 1661012
(43) Date de publication de la demande: 18.09.2019
(73) Titulaire: Arkema France, 92700 Colombes (FR)
(72) Inventeur: PINEAU, Quentin, 27000 Evreux (FR); BRIFFAUD, Thierry, 27300 Bernay (FR); LOYEN, Karine, 27500 Pont-Audemer (FR); BERDIN, Laure, 92400 Courbevoie (FR)
(74) Mandataire: Arkema Patent
(86) Numéro de dépôt international: PCT/FR2017/053109
(87) Numéro de publication internationale: WO 2018/087501

(56) Documents cités:
- EP-A1- 1 783 156
- EP-A2- 2 289 986
- WO-A1-00/75220
- WO-A1-2006/108959

## Description

La présente invention concerne des compositions de copolymères à blocs, facilement extrudables, notamment en films imper-respirants, et leur procédé de fabrication. Ces compositions perméables à la vapeur d'eau sont utilisables notamment dans le domaine alimentaire, l'équipement sportif, ou dans le bâtiment, notamment comme matériau d'isolation sous la toiture des habitations et pour l'isolation des murs.

Dans ces domaines, il est important de pouvoir disposer de films polymères présentant une perméabilité à la vapeur d'eau suffisante, pour permettre par exemple la préparation, la cuisson, le fumage d'aliments, et/ou leur conditionnement.

Dans certains copolymères à blocs, une augmentation de la teneur en groupements polyéther permet d'augmenter la perméabilité à la vapeur d'eau de ces copolymères.

Parmi ces copolymères à blocs, on peut citer les copolymères à blocs polyamide et blocs polyéther (PEBA). Ces PEBA appartiennent à la classe particulière des polyétheresteramides lorsqu'ils résultent de la copolycondensation de séquences polyamide à extrémités carboxyliques réactives avec des séquences polyéther à extrémités réactives, qui sont des polyétherpolyols (polyétherdiols), les liaisons entre les blocs polyamide et les blocs souples polyéther étant des liaisons ester.

Les PEBA sont connus pour leurs propriétés physiques telles que leur flexibilité, leur tenue au choc, et leur facilité de mise en œuvre par injection.

Toutefois, ces copolymères sont délicats à transformer par extrusion, notamment en raison d'une faible viscosité à l'état fondu et d'une faible résistance à l'état fondu (melt strength) qui en résulte. Un matériau avec une faible résistance à l'état fondu peut conduire en particulier à des pièces qui se déforment avant de durcir en refroidissant.

Il existe différents moyens de moduler la viscosité à l'état fondu d'un polymère.

Ainsi, il peut être envisagé d'augmenter le taux de polyamide, ce qui tend à augmenter la viscosité. Par ailleurs, on peut obtenir des compositions polymères extrudables par compoundage du copolymère à blocs avec d'autres polymères, notamment des polyoléfines. Mais dans les deux cas, cela fait baisser le taux de PEG global présent dans la composition polymère et réduit de ce fait sa perméabilité à la vapeur d'eau.

Il est également possible d'augmenter la viscosité à l'état fondu en allongeant les chaînes du polymère, par exemple en prolongeant la polymérisation. Cette approche a été décevante en raison de la dégradation des blocs PEG, laquelle entraîne en outre à une coloration (jaunissement) du matériau, sans pouvoir atteindre les niveaux souhaités de viscosité à l'état fondu, d'au moins 300 Pa.s, mesurée selon la norme ISO 1621-10 : 2015.

Enfin, on peut envisager d'augmenter la viscosité à l'état fondu en augmentant simultanément la taille des différents blocs du polymère, par exemple des blocs polyamide et des blocs polyéther dans le cas du PEBA.Par exemple, en passant pour un PEBA PA6-PEG, de 1500-1500 à 2000-2000, il devrait être possible d'augmenter la viscosité à l'état fondu à degré de polymérisation équivalent, sans dégrader les propriétés de perméabilité à la vapeur d'eau. Les essais conduits dans ce sens n'ont toutefois pas abouti : la réactivité entre les blocs PA et les blocs PEG est fortement réduite.

L'invention a donc pour but de fournir des compositions à base de copolymères à blocs, extrudables, pour fabriquer des objets, tels que des films, présentant une perméabilité à la vapeur d'eau élevée, correspondant au sens de l'invention à un MVTR d'au moins 700 g/m2, de préférence d'au moins 800 g/m2, voire d'au moins 1000 g/m2, par 24 heures à 23°C pour un taux d'humidité relative de 50% et une épaisseur d'échantillon de 30 µm, mesurée selon la norme ASTM E96B.

En effet, la demanderesse a découvert qu'il était possible d'augmenter la viscosité à l'état fondu de compositions de copolymères à blocs sans sacrifier la perméabilité à la vapeur d'eau de l'objet obtenu à partir de ces compositions de copolymères.

La présente invention a donc pour objet une composition polymère extrudable comprenant :
- de 50 à 99,95%, de préférence de 80 à 99,95%, de préférence de 99,5 à 99,95% d'au moins un copolymère à blocs souples et blocs rigides, comprenant :
   - au moins 25% en poids de blocs souples polyéthylène glycol (PEG) de fonctionnalité égale à 2, ledit PEG de fonctionnalité 2 contenant deux groupes hydroxyles au maximum, sur le poids total de copolymère,
      et
- de 0,01 à 5%, de préférence de 0,05 à 0,5% en poids d'au moins un polyol (y-compris polyéther polyol) de fonctionnalité supérieure à 2 comportant au moins trois groupes hydroxyles,
   sur le poids total de la composition,
caractérisée en ce que :
- la masse molaire moyenne en poids dudit copolymère est au moins égale à 100 000 g/mol.

Par copolymère à blocs selon l'invention, on entend les polymères thermoplastiques élastomères (TPE), qui comprennent, en alternance, des blocs ou segments dits durs ou rigides (au comportement plutôt thermoplastique) et des blocs ou segments dits souples ou flexibles (au comportement plutôt élastomère). Un bloc est dit « souple » s'il présente une faible température de transition vitreuse (Tg). Par faible température de transition vitreuse, on entend une température de transition vitreuse Tg inférieure à 15 °C, de préférence inférieure à 0°C, avantageusement inférieure à -15°C, encore plus avantageusement à -30°C, éventuellement inférieure à - 50°C.

Par blocs souples ou mous envisageables dans le copolymère selon l'invention, on entend notamment ceux choisis parmi les blocs polyéther, les blocs polyester, les blocs polysiloxane, tels que les blocs polydiméthylsiloxane ou PDMS, les blocs polyoléfine, les blocs polycarbonate, et leurs mélanges. Les blocs souples envisageables sont décrits par exemple dans la demande de brevet français n° : 0950637 page 32 ligne 3 à page 38 ligne 23. A titre d'exemple, les blocs polyéthers sont choisis parmi le poly(éthylène glycol) (PEG), le poly(1,2-propylène glycol) (PPG), le poly(1,3-propylène glycol) (PO3G), le poly(tétraméthylène glycol) (PTMG), et leurs copolymères ou mélanges. Les blocs rigides peuvent être à base de polyamide, de polyuréthane, de polyester ou d'un mélange de ces polymères. Ces blocs sont notamment décrits dans la demande de brevet français n° : 0856752. Les blocs rigides sont de préférence à base de polyamide.

Les blocs polyamide (abrégé PA) peuvent comporter des homopolyamides ou des copolyamides. Les blocs polyamide envisageables dans la composition de l'invention sont notamment ceux définis dans la demande FR0950637 de la page 27 ligne 18 à la page 31 ligne 14. A titre d'exemples de blocs polyamides, on peut citer ceux comprenant au moins une des molécules suivantes: PA12, PA11, PA10.10, PA6.10, PA6, PA6/12, un copolyamide comprenant au moins un des monomères suivants : 6, 11, 12, 5.4, 5.9, 5.10, 5.12, 5.13, 5.14, 5.16, 5.18, 5.36, 6.4, 6.6, 6.9, 6.10, 6.12, 6.13, 6.14, 6.16, 6.18, 6.36, 10.4, 10.9, 10.10, 10.12, 10.13, 10.14, 10.16, 10.18, 10.36, 10.T, 12.4, 12.9, 12.10, 12.12, 12.13, 12.14, 12.16, 12.18, 12.36, 12.T et leurs mélanges ou copolymères.

Avantageusement, ledit au moins un copolymère à blocs comprend au moins un bloc choisi parmi : les blocs polyéther autres que PEG (en plus de la quantité minimale de polyéthers PEG de fonctionnalité égale à 2 selon la composition de l'invention), les blocs polyester, les blocs polyamide, les blocs polyuréthane, et leurs mélanges. A titre d'exemple de copolymère à blocs rigides et à blocs souples, on peut citer respectivement (a) les copolymères à blocs polyester et blocs polyéther (appelés aussi COPE ou copolyétheresters), (b) les copolymères à blocs polyuréthane et blocs polyéther (appelés aussi TPU abréviation de polyuréthanes thermoplastiques) et (c) les copolymères à blocs polyamide et blocs polyéther (appelés aussi PEBA selon l'IUPAC, ou encore polyéther-bloc-amide).

Avantageusement, dans la composition selon l'invention, le ratio en poids des blocs rigides sur les blocs souples dudit au moins un copolymère est compris dans la gamme de 0,5 à 3.

Avantageusement, les blocs rigides du copolymère représentent de 30 à 55% en poids, et les blocs souples du copolymère représentent de 45 à 70% en poids, sur le poids total de copolymère à blocs.

De préférence, la masse molaire moyenne en nombre Mn des blocs souples du copolymère est comprise dans la gamme de 500 à 3000 g/mol, de préférence de 800 à 2000 g/mol.

De préférence, la masse molaire moyenne en nombre Mn des blocs rigides du copolymère est comprise dans la gamme de 500 à 3000 g/mol, de préférence de 800 à 2000 g/mol.

Avantageusement, ledit au moins un copolymère comprend un copolymère à blocs rigides polyamide et blocs souples polyéther (PEBA), de préférence un polyétheresteramide.

De manière avantageuse, ledit au moins un copolymère de la composition de l'invention comprend de 45 à 75% en poids de blocs souples polyéthylène glycol (PEG), de préférence de 50 à 70% en poids de blocs PEG, sur le poids total de copolymère.

De manière avantageuse, ledit au moins un copolymère de la composition de l'invention comprend au moins 50% en poids de blocs PA choisis parmi : PA6, PA6.6, PA10.10, PA10.12, PA11, PA12, PA6/12, PA6/6.6, et leurs mélanges.

Avantageusement, ledit au moins un copolymère dans la composition selon l'invention est choisi parmi les PEBAs suivants : PA6-PEG, PA10.10-PEG, PA10.12-PEG, PA11-PEG, PA12-PEG, PA6/12-PEG, PA6.6-PEG, PA6/6.6-PEG, et leurs mélanges.

Avantageusement, dans la composition selon l'invention, la masse molaire moyenne en poids du copolymère est comprise dans la gamme de 100 000 à 200 000g/mol, de préférence de 100 000 à 180 000 g/mol, de préférence de 100 000 à 160 000 g/mol.

Par polyol de fonctionnalité supérieure à deux, on entend notamment :
- des polyols monomères, notamment des triols aliphatiques monomères tels que le glycérol, le triméthylolpropane, le pentaérythritol, et/ou
- des polyols polymères, notamment des triols à chaines polyéther, des triols de polycaprolactone, des polyols mixtes polyéther-polyester de fonctionnalité supérieure à 2.

Avantageusement, ledit au moins un polyol est choisi parmi : le pentaérythritol, triméthylolpropane, triméthyloléthane, triméthylolpropane, hexanetriol, diglycérol, méthylglucoside, tétraéthanol, sorbitol, dipentaérythritol, cyclodextrine, les polyetherpolyols comportant au moins trois groupes hydroxyles, et leurs mélanges.

L'ajout d'un polyol de fonctionnalité supérieure 2 provoque des liaisons de pontage reliant entre eux des blocs rigides du copolymère, de préférence par des liaisons ester.

La masse molaire moyenne en poids de ce(s) polyol(s) est au maximum de 1000 g/mol ; et est généralement comprise dans la gamme de 50 à 1000 g/mol, de préférence de 50 à 500 g/mol, de préférence de 50 à 200 g/mol.

Avantageusement, la composition extrudable selon l'invention comprend de 0,15 à 0,2% en poids dedit polyol sur le poids total de la composition. Pour la caractériser de manière encore plus précise, la composition extrudable selon l'invention comprend avantageusement de 3,5 à 35 µeq/g dedit polyol sur le poids total de la composition.

Avantageusement, la viscosité à l'état fondu à 230°C (Pa.s) de la composition selon l'invention est supérieure à 300 Pa.s, de préférence supérieure à 400 Pa.s, de préférence comprise dans la gamme de 400 à 2000 Pa.s, de préférence comprise dans la gamme de 500 à 2000 Pa.s, mesurée selon la norme ISO 1621-10 : 2015.

De manière avantageuse, la composition selon l'invention ne comporte pas de polyoléfine.

Avantageusement, la composition selon l'invention comporte en outre (en plus du copolymère tel que défini ci-dessus), de 0,1 à 80%, de préférence de 0,1 à 50%, de préférence de 0,1 à 20% en poids d'au moins un polyamide su le poids total de la composition, choisi parmi : du PA 6, du PA6/6.6, du PA6.12, du PA 12, du PA11, du PA10.10, du PA6, du PA6.6, du PA6.10, du PA6/12, un polyamide ou copolyamide comprenant au moins un des monomères suivants : 6, 11, 12, 5.4, 5.9, 5.10, 5.12, 5.13, 5.14, 5.16, 5.18, 5.36, 6.4, 6.6, 6.9, 6.10, 6.12, 6.13, 6.14, 6.16, 6.18, 6.36, 10.4, 10.9, 10.10, 10.12, 10.13, 10.14, 10.16, 10.18, 10.36, 10.T, 12.4, 12.9,12.10, 12.12, 12.13, 12.14, 12.16, 12.18, 12.36, 12.T et leurs mélanges ou copolymères.

La présente invention a également pour objet un procédé d'extrusion caractérisé en ce qu'il met en oeuvre une composition polymère extrudable selon l'invention telle que définie ci-dessus, pour fabriquer un film, une feuille, une membrane, une plaque, un profilé, un tube, un tuyau, un corps creux, un réservoir, un boyau synthétique, un câble, un jonc, un filament, une fibre, et leurs mélanges. Par exemple, la composition de l'invention peut avantageusement être étirée par soufflage et extrudée à travers une filière annulaire chauffée.

La présente invention a également pour objet un article ou objet extrudé susceptible d'être fabriqué par extrusion d'une composition conforme à l'invention, ledit objet ayant une perméabilité à la vapeur d'eau (MVTR) d'au moins 700 g/m2, de préférence d'au moins 100 g/m2, de préférence compris dans la gamme de 1000 à 5000 g/m2, par 24 heures à 23°C pour un taux d'humidité relative de 50% et une épaisseur d'échantillon de 30 µm, mesurée selon la norme ASTM E96B.

Avantageusement, cet objet extrudé selon l'invention présente une absorption en eau à saturation à 23°C comprise dans la gamme de 50 à 500% en poids, de préférence de 50 à 250%, de préférence de 100 à 150% en poids, selon la norme ISO 62 : 2008, par rapport au poids de composition conforme à l'invention.

L'objet extrudé à partir de la composition selon l'invention présente avantageusement un module d'élasticité en traction inférieur à 500 MPa, de préférence compris dans la gamme de 10 à 200 MPa, de préférence de 20 à 100 MPa, mesuré selon la norme ISO 527-2: 2012-1A.

Avantageusement ledit objet obtenu par extrusion de la composition selon l'invention présente une dureté instantanée comprise dans la gamme de 20 à 60 Shore D, de préférence de 30 à 50 Shore D, selon la norme ISO 868:2003.

La présente invention a également pour objet l'utilisation d'une composition polymère selon l'invention tel que définie plus haut, dans un dispositif d'extrusion pour la fabrication d'un objet perméable à la vapeur d'eau, aux propriétés avantageuses, notamment de MVTR, absorption en eau, propriétés mécaniques, telles que définies ci-dessus. Selon un mode de réalisation avantageux, la composition selon l'invention est utilisée ou additivée dans du polyamide, par exemple dans du PA 6, pour la fabrication des films d'emballage de saucisses pour cuisson et/ou fumage, par xemple fumigation). Selon un mode de réalisation avantageux, la composition selon l'invention est utilisée dans des films imper-respirants pour le bâtiment. Ledit objet est avantageusement choisi parmi : un composant d'emballage, notamment agroalimentaire, un film d'emballage alimentaire, un film d'emballage pour cuisson et/ou fumage, notamment de saucisse, et tout autre film imper-respirant, notamment utilisé dans le bâtiment, un composant textile, d'équipement sportif, de chaussure, de chaussure de sport, de semelle de chaussure, de décoration, de bagage, de lunettes, de mobilier, d'équipement électrique, électronique, audio-visuel, informatique, d'équipement automobile ou aéronautique et/ou un composant d'équipement médical.

### Exemples :

Les exemples ci-dessous illustrent la présente invention sans en limiter la portée. Dans les exemples, sauf indication contraire, tous les pourcentages et parties sont exprimés en poids.

Copolymères utilisés dans les compositions des essais (exemples et comparatifs) suivants :
Comparatif 1 : Cp1
   PEBA 1 : PA12-PEG à base de blocs PA12 de Mn=4500g/mol et de blocs PEG de Mn=1500g/mol ; le ratio bloc rigide/ bloc souple : 3.
   La masse molaire moyenne en poids du PEBA 1 (Mw) = 111 000 g/mol.
Comparatif 2 : Cp2
   PEBA 2 : PA6-PEG à base de blocs PA6 de Mn=1500g/mol et de blocs PEG de Mn=1500g/mol ; le ratio bloc rigide/ bloc souple : 1.
   La masse molaire moyenne en poids du PEBA 1 (Mw) = 112 000 g/mol.

### Exemple 1 selon l'invention : Ex1

Composition de PEBA 2 + 0,1 % pentaérythritol (« PET »)

La masse molaire moyenne en poids du PEBA 1 (Mw) = 144 000 g/mol.

Bien que les essais se réfèrent à une composition à base de PEBA (Pebax®), il est bien entendu que les compositions selon la présente invention ne se limitent pas à ce mode de réalisation, mais peuvent comprendre tout type de copolymère à blocs, seul ou en mélange.

Le tableau 1 suivant montre les résultats de viscosité inhérente et de viscosité à l'état fondu des compositions Cp1, Cp2 et Ex1, ainsi que les résultats de mesure de MVTR, d'absorption en eau à saturation, et de dureté obtenus sur objets extrudés à partir de ces compositions respectives.

**Tableau 1**

| **Essai / Composition** | **Viscosité inhérente ISO 307 ATO : 0,5% massique dans le métacrésol à 20°C, en g/g** | **Viscosité à l'état fondu eta* 230°C, 10rad/s (Pa.s) ISO 6721-10:2015** | **MVTR ASTM E96 B (par 24h, à 23°C, HR 50%, 30 µm)** | **Absorption en eau à saturation à 23°C (%) ISO 62 :2008** | **Dureté Shore D ISO 868:2003** |
|---|---|---|---|---|---|
| Cp1 / PEBA 1 (12/PEG 4500/1500) | 1.5 | 700 | 560 | <50 | 60 |
| Cp2 / PEBA 2 (6/PEG 1500/1500) | 1.35 | 200 | 1070 | >100 | 40 |
| Ex1 / PEBA 2 + 0.1% PET | 1.4 | 500 | 1125 | >100 | 40 |

On observe que la composition Ex1 selon l'invention est plus facilement extrudable que la composition Cp2.

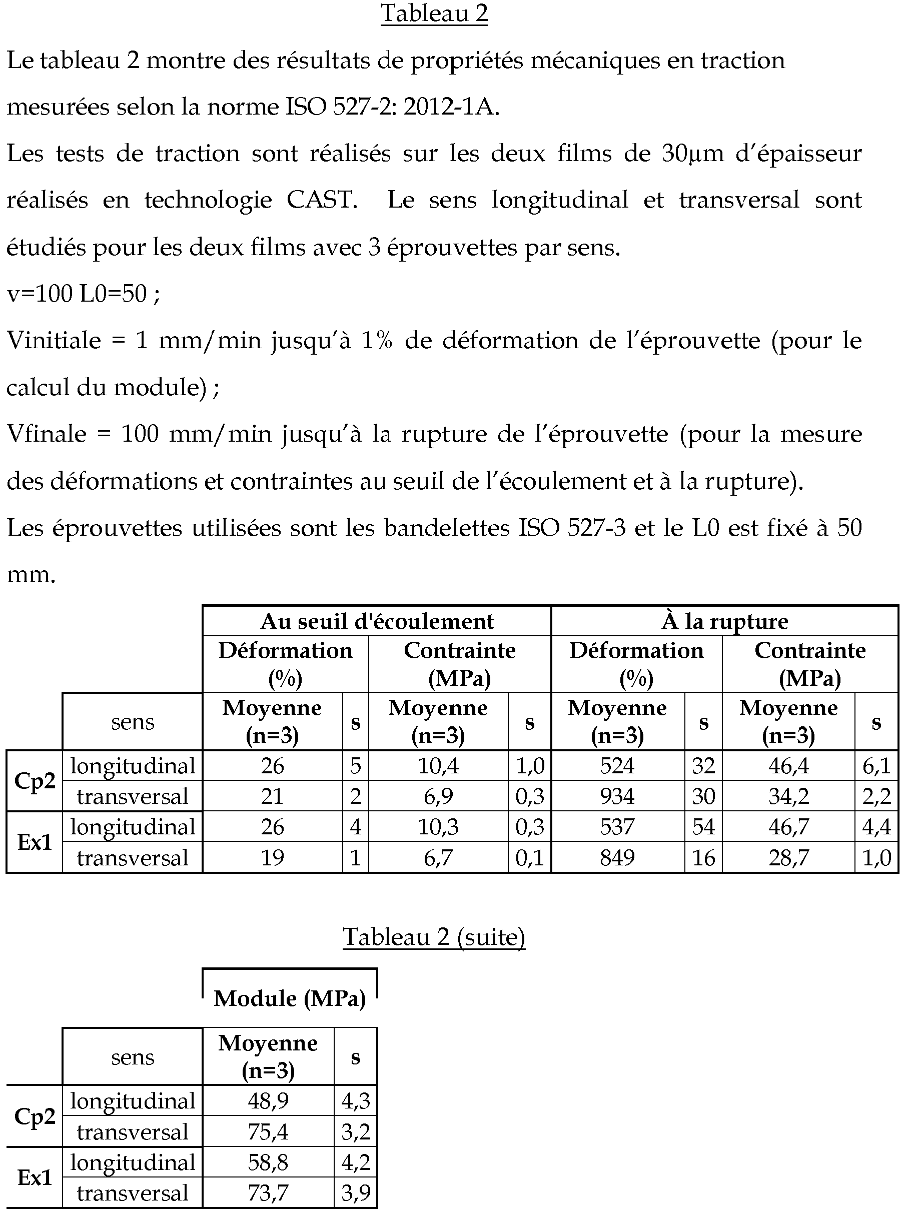

Les propriétés mécaniques des films Cp2 et Ex1 obtenus sont similaires, que ce soit dans le sens longitudinal ou transversal de l'extrusion.

## Revendications

1. Composition polymère extrudable comprenant :
- de 50 à 99,95%, de préférence de 80 à 99,95% en poids d'au moins un copolymère à blocs souples et blocs rigides, comprenant :
- au moins 25% en poids de blocs souples polyéthylène glycol (PEG) de fonctionnalité égale à 2, sur le poids total de copolymère,
et
- de 0,01 à 5%, de préférence de 0,05 à 0,5% en poids d'au moins un polyol de fonctionnalité supérieure à 2 comportant au moins trois groupes hydroxyles, sur le poids total de la composition,
**caractérisée en ce que** :
- la masse molaire moyenne en poids dudit copolymère est au moins égale à 100 000 g/mol ; et
- la masse molaire moyenne en poids du polyol est au maximum de 1000 g/mol ; et
- ledit au moins un polyol relie entre eux des blocs rigides du copolymère.

2. Composition extrudable selon la revendication 1, **caractérisée en ce qu'**elle comprend de 0,15 à 0,2% en poids dedit polyol sur le poids total de la composition.

3. Composition selon la revendication 1 ou 2, dans laquelle ledit au moins un copolymère à blocs comprend au moins un bloc choisi parmi : les blocs polyéther autres que PEG, les blocs polyester, les blocs polyamide, les blocs polyuréthane, et leurs mélanges.

4. Composition selon l'une quelconque des revendications précédentes, dans laquelle le ratio en poids des blocs rigides sur les blocs souples dudit au moins un copolymère est compris dans la gamme de 0,5 à 3.

5. Composition selon l'une quelconque des revendications précédentes, dans laquelle :
- les blocs rigides du copolymère représentent de 30 à 55% en poids, et
- les blocs souples du copolymère représentent de 45 à 70% en poids, sur le poids total de copolymère à blocs.

6. Composition selon l'une quelconque des revendications précédentes, **caractérisée en ce que** la masse molaire moyenne en nombre Mn des blocs souples du copolymère est comprise dans la gamme de 500 à 3000 g/mol, de préférence de 800 à 2000 g/mol.

7. Composition selon l'une quelconque des revendications précédentes, **caractérisée en ce que** la masse molaire moyenne en nombre Mn des blocs rigides du copolymère est comprise dans la gamme de 500 à 3000 g/mol, de préférence de 800 à 2000 g/mol.

8. Composition selon l'une quelconque des revendications précédentes, dans laquelle ledit au moins un copolymère comprend un copolymère à blocs rigides polyamide et blocs souples polyéther (PEBA).

9. Composition selon l'une quelconque des revendications précédentes, dans laquelle ledit au moins un copolymère comprend de 45 à 75% en poids de blocs souples polyéthylène glycol (PEG), de préférence de 50 à 70% en poids de blocs PEG, sur le poids total de copolymère.

10. Composition selon l'une quelconque des revendications précédentes, dans laquelle ledit au moins un copolymère comprend au moins 50% en poids de blocs PA choisis parmi : PA6, PA6.6, PA10.10, PA10.12, PA11, PA12, PA6/12, PA6/6.6, et leurs mélanges.

11. Composition selon l'une quelconque des revendications précédentes, dans laquelle ledit au moins un copolymère est choisi parmi les PEBAs suivants: PA6-PEG, PA10.10-PEG, PA10.12-PEG, PA11-PEG, PA12-PEG, PA6/12-PEG, PA6.6-PEG, PA6/6.6-PEG, et leurs mélanges.

12. Composition selon l'une quelconque des revendications précédentes, **caractérisée en ce que** la masse molaire moyenne en poids du copolymère est comprise dans la gamme de 100 000 à 200 000g/mol, de préférence de 100 000 à 180 000 g/mol, de préférence de 100 000 à 160 000 g/mol.

13. Composition selon l'une quelconque des revendications précédentes, **caractérisée en ce que** la masse molaire moyenne en poids dudit au moins un polyol est comprise dans la gamme de 50 à 1000 g/mol.

14. Composition selon l'une quelconque des revendications précédentes, **caractérisée en ce que** ledit au moins un polyol est choisi parmi : le pentaérythritol, triméthylolpropane, triméthyloléthane, triméthylolpropane, hexanetriol, diglycérol, méthylglucoside, tétraéthanol, sorbitol, dipentaérythritol, cyclodextrine, les polyetherpolyols comportant au moins trois groupes hydroxyles, et leurs mélanges.

15. Composition selon l'une quelconque des revendications précédentes, **caractérisée en ce que** sa viscosité à l'état fondu à 230°C (Pa.s) est supérieure à 400 Pa.s, de préférence comprise dans la gamme de 400 à 2000 Pa.s, de préférence comprise dans la gamme de 500 à 2000 Pa.s, mesurée selon la norme ISO 1621-10 : 2015.

16. Composition selon l'une quelconque des revendications précédentes, **caractérisée en ce qu'**elle ne comporte pas de polyoléfine.

17. Composition selon l'une quelconque des revendications précédentes, **caractérisée en ce qu'**elle comporte en outre au moins un polyamide choisi parmi : du PA 12, du PA11, du PA10.10, du PA6, du PA 6.6, du PA6/12, un copolyamide comprenant au moins un des monomères suivants : 6, 11, 12, 5.4, 5.9, 5.10, 5.12, 5.13, 5.14, 5.16, 5.18, 5.36, 6.4, 6.6, 6.9, 6.10, 6.12, 6.13, 6.14, 6.16, 6.18, 6.36, 10.4, 10.9, 10.10, 10.12, 10.13, 10.14, 10.16, 10.18, 10.36, 10.T, 12.4, 12.9, 12.10, 12.12, 12.13, 12.14, 12.16, 12.18, 12.36, 12.T et leurs mélanges ou copolymères.

18. Procédé d'extrusion **caractérisé en ce qu'**il met en oeuvre une composition polymère extrudable selon l'une quelconque des revendications 1 à 17, pour fabriquer un film, une feuille, une membrane, une plaque, un profilé, un tube, un tuyau, un corps creux, un réservoir, un boyau synthétique, un câble, un jonc, un filament, une fibre.

19. Objet extrudé fabriqué selon le procédé de la revendication 18, ledit objet ayant une perméabilité à la vapeur d'eau (MVTR) d'au moins 700 g/m2, de préférence d'au moins 1000 g/m2, de préférence compris dans la gamme de 1000 à 5000 g/m2, par 24 heures à 23°C pour un taux d'humidité relative de 50% et une épaisseur d'échantillon de 30 µm, mesurée selon la norme ASTM E96B.

20. Objet extrudé selon la revendication 19, **caractérisé en ce qu'**il présente une absorption en eau à saturation à 23°C comprise dans la gamme de 50 à 500% en poids, de préférence de 50 à 250%, de préférence de 100 à 150% en poids, selon la norme ISO 62 : 2008, par rapport au poids de PEBA.

21. Objet selon la revendication 19 ou 20, **caractérisé en ce qu'**il présente un module d'élasticité en traction inférieur à 500 MPa, de préférence compris dans la gamme de 10 à 200 MPa, de préférence de 20 à 100 MPa, mesuré selon la norme ISO 527-2: 2012-1A.

22. Objet selon l'une quelconque des revendications 19 à 21, **caractérisé en ce qu'**il présente une dureté instantanée comprise dans la gamme de 20 à 60 Shore D, de préférence de 30 à 50 Shore D, selon la norme ISO 868: 2003.

23. Objet selon l'une quelconque des revendications 19 à 22, ledit objet étant un composant d'emballage, notamment agroalimentaire, un film d'emballage alimentaire, un film d'emballage pour cuisson et/ou fumage, notamment de saucisse, un film imper-respirant, notamment utilisé dans le bâtiment, un composant textile, d'équipement sportif, de chaussure, de chaussure de sport, de semelle de chaussure, de décoration, de bagage, de lunettes, de mobilier, d'équipement audio-visuel, informatique, d'équipement automobile ou aéronautique et/ou un composant d'équipement médical.

24. Utilisation d'une composition polymère selon l'une quelconque des revendications 1 à 17, dans un dispositif d'extrusion pour la fabrication d'un objet perméable à la vapeur d'eau, tel que défini selon l'une quelconque des revendications 19 à 23.

## Patentansprüche

1. Extrudierbare Polymerzusammensetzung, umfassend:
- 50 bis 99,95 %, vorzugsweise 80 bis 99,95 Gewichts-%, mindestens eines Copolymers aus nachgiebigen Blöcken und steifen Blöcken, umfassend:
- mindestens 25 Gewichts-% an nachgiebigen Polyethylenglykol(PEG)-Blöcken mit einem Funktionskennwert von 2, bezogen auf das Gesamtgewicht des Copolymers,
und
- 0,01 bis 5 %, vorzugsweise 0,05 bis 0,5 Gewichts-% an mindestens einem Polyol mit einem Funktionskennwert von mehr als 2, das mindestens 3 Hydroxylgruppen aufweist, bezogen auf das Gewichtgewicht der Zusammensetzung,
**dadurch gekennzeichnet, dass**:
- das Gewichtsmittel des Molekulargewichts des Copolymers mindestens gleich 100.000 g/mol ist; und
- das Gewichtsmittel des Molekulargewichts des Polyols höchstens 1.000 g/mol beträgt; und
- das mindestens eine Polyol steife Blöcke des Copolymers miteinander verbindet.

2. Extrudierbare Zusammensetzung nach Anspruch 1, **dadurch gekennzeichnet, dass** sie 0,15 bis 0,2 Gewichts-% von diesem Polyol umfasst, bezogen auf das Gesamtgewicht der Zusammensetzung.

3. Zusammensetzung nach Anspruch 1 oder 2, wobei das mindestens eine Blockcopolymer mindestens einen Block umfasst, der aus den folgenden ausgewählt ist: den Polyetherblöcken, welche sich von PEG unterscheiden, den Polyesterblöcken, den Polyamidblöcken, den Polyurethanblöcken und deren Mischungen.

4. Zusammensetzung nach einem beliebigen der vorhergehenden Ansprüche, wobei das Gewichtsverhältnis der steifen Blöcke zu den nachgiebigen Blöcken bei dem mindestens einen Copolymer im Bereich von 0,5 bis 3 liegt.

5. Zusammensetzung nach einem beliebigen der vorhergehenden Ansprüche, wobei:
- die steifen Blöcke des Copolymers 30 bis 55 Gewichts-% ausmachen, und
- die nachgiebigen Blöcke des Copolymers 45 bis 70 Gewichts-% ausmachen,
bezogen auf das Gesamtgewicht des Blockcopolymers.

6. Zusammensetzung nach einem beliebigen der vorhergehenden Ansprüche, **dadurch gekennzeichnet, dass** das Zahlenmittel des Molekulargewichts Mn der nachgiebigen Blöcke des Copolymers im Bereich von 500 bis 3.000 g/mol, vorzugsweise von 800 bis 2.000 g/mol, liegt.

7. Zusammensetzung nach einem beliebigen der vorhergehenden Ansprüche, **dadurch gekennzeichnet, dass** das Zahlenmittel des Molekulargewichts Mn der steifen Blöcke des Copolymers im Bereich von 500 bis 3.000 g/mol, vorzugsweise von 800 bis 2.000 g/mol, liegt.

8. Zusammensetzung nach einem beliebigen der vorhergehenden Ansprüche, wobei das mindestens eine Copolymer ein Copolymer mit steifen Polyamidblöcken und nachgiebigen Polyetherblöcken (PEBA) umfasst.

9. Zusammensetzung nach einem beliebigen der vorhergehenden Ansprüche, wobei das mindestens eine Copolymer 45 bis 75 Gewichts-% an nachgiebigen Polyethylenglykol(PEG)-Blöcken umfasst, vorzugsweise 50 bis 70 Gewichts-% an PEG-Blöcken, bezogen auf das Gesamtgewicht des Copolymers.

10. Zusammensetzung nach einem beliebigen der vorhergehenden Ansprüche, wobei das mindestens eine Copolymer mindestens 50 Gewichts-% an PA-Blöcken umfasst, die aus den folgenden ausgewählt sind: PA6, PA6.6, PA10.10, PA10.12, PA11, PA12, PA6/12, PA6/6.6, und deren Mischungen.

11. Zusammensetzung nach einem beliebigen der vorhergehenden Ansprüche, wobei das mindestens eine Copolymer aus den folgenden PEBA ausgewählt ist: PA6-PEG, PA10.10-PEG, PA10.12-PEG, PA11-PEG, PA12-PEG, PA6/12-PEG, PA6.6-PEG, PA6/6.6-PEG, und deren Mischungen.

12. Zusammensetzung nach einem beliebigen der vorhergehenden Ansprüche, **dadurch gekennzeichnet, dass** das Gewichtsmittel des Molekulargewichts des Copolymers im Bereich von 100.000 bis 200.000 g/mol, vorzugsweise von 100.000 bis 180.000 g/mol, vorzugsweise von 100.000 bis 160.000, liegt.

13. Zusammensetzung nach einem beliebigen der vorhergehenden Ansprüche, **dadurch gekennzeichnet, dass** das Gewichtsmittel des Molekulargewichts des mindestens einen Polyols im Bereich von 50 bis 1.000 g/mol liegt.

14. Zusammensetzung nach einem beliebigen der vorhergehenden Ansprüche, **dadurch gekennzeichnet, dass** das mindestens eine Polyol aus den folgenden ausgewählt ist: Pentaerythrit, Trimethylolpropan, Trimethylolethan, Trimethylolpropan, Hexantriol, Diglycerin, Methylglucosid, Tetraethanol, Sorbit, Dipentaerythrit, Cyclodextrin, den Polyetherpolyolen, die mindestens drei Hydroxylgruppen aufweisen, und deren Mischungen.

15. Zusammensetzung nach einem beliebigen der vorhergehenden Ansprüche, **dadurch gekennzeichnet, dass** ihre Viskosität im geschmolzenen Zustand bei 230 °C (Pa.s) mehr als 400 Pa.s beträgt, wobei sie vorzugsweise im Bereich von 400 bis 2.000 Pa.s liegt, vorzugsweise im Bereich von 500 bis 2.000 Pa.s, gemessen nach der Norm ISO 1621-10: 2015.

16. Zusammensetzung nach einem beliebigen der vorhergehenden Ansprüche, **dadurch gekennzeichnet, dass** sie keinerlei Polyolefin aufweist.

17. Zusammensetzung nach einem beliebigen der vorhergehenden Ansprüche, **dadurch gekennzeichnet, dass** sie darüber hinaus mindestens ein Polyamid aufweist, welches aus den folgenden ausgewählt ist: PA 12, PA11, PA10.10, PA6, PA 6.6, PA6/12, einem Copolyamid, das mindesten eines der folgenden Monomere umfasst: 6, 11, 12, 5.4, 5.9, 5.10, 5.12, 5.13, 5.14, 5.16, 5.18, 5.36, 6.4, 6.6, 6.9, 6.10, 6.12, 6.13, 6.14, 6.16, 6.18, 6.36, 10.4, 10.9, 10.10, 10.12, 10.13, 10.14, 10.16, 10.18, 10.36, 10.T, 12.4, 12.9, 12.10, 12.12, 12.13, 12.14, 12.16, 12.18, 12.36, 12.T und deren Mischungen und Copolymere.

18. Extrusionsverfahren, das **dadurch gekennzeichnet ist, dass** eine extrudierbare Polymerzusammensetzung gemäß einem beliebigen der Ansprüche 1 bis 17 zum Einsatz kommt, um eine Folie, eine Blatt, eine Membran, eine Platte, ein Profilstück, eine Röhre, einen Schlauch, einen Hohlkörper, einen Vorratsbehälter, einen Kunstdarm, ein Kabel, eine Stange, ein Filament, eine Faser herzustellen.

19. Extrudierter Gegenstand, der nach dem Verfahren des Anspruchs 18 hergestellt ist, wobei der Gegenstand eine Wasserdampfdurchlässigkeit (MVTR) von mindestens 700 g/m2, vorzugsweise von mindestens 1.000 g/m2, vorzugsweise im Bereich von 1.000 bis 5.000 g/m2, pro 24 Stunden bei 23 °C und einer relativen Luftfeuchtigkeit von 50 % sowie einer Prüfstückdicke von 30 µm hat, wobei die Messung nach der Norm ASTM E96B erfolgt.

20. Extrudierter Gegenstand nach Anspruch 19, **dadurch gekennzeichnet, dass** er bei Sättigung eine Wasseraufnahme bei 23 °C im Bereich von 50 bis 500 Gewichts-%, vorzugsweise von 50 bis 250 %, vorzugsweise von 100 bis 150 Gewichts-% aufweist, gemäß der Norm ISO 62: 2008, bezogen auf das PEBA-Gewicht.

21. Gegenstand nach Anspruch 19 oder 20, **dadurch gekennzeichnet, dass** er im Zugversuch einen Elastizitätsmodul von weniger als 500 MPa zeigt, wobei dieser vorzugsweise im Bereich von 10 bis 200 MPa, vorzugsweise von 20 bis 100 MPa liegt, wenn die Messung gemäß der Norm ISO 527-2: 2012-1A erfolgt.

22. Gegenstand nach einem beliebigen der Ansprüche 19 bis 21, **dadurch gekennzeichnet, dass** er eine sofortige Härte im Bereich von 20 bis 60 Shore D, vorzugsweise von 30 bis 50 Shore D zeigt, gemäß der Norm ISO 868: 2003.

23. Gegenstand nach einem beliebigen der Ansprüche 19 bis 22, wobei es sich bei dem Gegenstand um einen Bestandteil einer Verpackung, insbesondere im Nahrungsmittelsektor, eine Folie zum Verpacken von Lebensmitteln, eine Verpackungsfolie zum Garen und/oder Räuchern, insbesondere von Würstchen, eine wasserundurchlässige atmungsaktive Folie, wie sie insbesondere im Bauwesen verwendet wird, einen Bestandteil von Textilien, von Sportausrüstungen, von Schuhen, von Sportschuhen, von Schuhsohlen, von Zierelementen, von Gepäckstücken, von Brillen, von Möbeln, von Audio- und Videogeräten, von Datenverarbeitungsgeräten, von Ausrüstungen für Kraftfahrzeuge und Luftfahrzeuge und/oder einen Bestandteil einer medizinischen Ausrüstung handelt.

24. Verwendung einer Polymerzusammensetzung nach einem beliebigen der Ansprüche 1 bis 17 in einer Extrusionsvorrichtung, um einen wasserdampfdurchlässigen Gegenstand gemäß der Begriffsbestimmung in einem beliebigen der Ansprüche 19 bis 23 herzustellen.

## Claims

1. Extrudable polymer composition comprising:
- from 50 to 99.95%, preferably from 80 to 99.95%, by weight of at least one copolymer comprising flexible blocks and rigid blocks, comprising:
- at least 25% by weight of polyethylene glycol (PEG) flexible blocks with a functionality equal to 2, relative to the total weight of copolymer,
and
- from 0.01 to 5%, preferably from 0.05 to 0.5%, by weight of at least one polyol with a functionality greater than 2, comprising at least three hydroxyl groups, relative to the total weight of the composition,
**characterized in that**:
- the weight-average molar mass of said copolymer is at least equal to 100 000 g/mol; and
- the weight-average molar mass of the polyol is at most 1000 g/mol; and
- said at least one polyol links rigid blocks of the copolymer to one another.

2. Extrudable composition according to Claim 1, **characterized in that** it comprises from 0.15 to 0.2% by weight of said polyol relative to the total weight of the composition.

3. Extrudable composition according to Claim 1 or 2, in which said at least one block copolymer comprises at least one block chosen from: polyether blocks other than PEG, polyester blocks, polyamide blocks, polyurethane blocks, and mixtures thereof.

4. Composition according to any one of the preceding claims, in which the weight ratio of the rigid blocks to the flexible blocks of said at least one copolymer is within the range from 0.5 to 3.

5. Composition according to any one of the preceding claims, in which:
- the rigid blocks of the copolymer represent from 30 to 55% by weight, and
- the flexible blocks of the copolymer represent from 45 to 70% by weight,
relative to the total weight of block copolymer.

6. Composition according to any one of the preceding claims, **characterized in that** the number-average molar mass Mn of the flexible blocks of the copolymer is within the range from 500 to 2000 g/mol, preferably from 800 to 2000 g/mol.

7. Composition according to any one of the preceding claims, **characterized in that** the number-average molar mass Mn of the rigid blocks of the copolymer is within the range from 500 to 3000 g/mol, preferably from 800 to 2000 g/mol.

8. Composition according to any one of the preceding claims, in which said at least one copolymer comprises a copolymer comprising polyamide rigid blocks and polyether (PEBA) flexible blocks.

9. Composition according to any one of the preceding claims, in which said at least one copolymer comprises from 45 to 75% by weight of polyethylene glycol (PEG) flexible blocks, preferably from 50 to 70% by weight of PEG blocks, relative to the total weight of copolymer.

10. Composition according to any one of the preceding claims, in which said at least one copolymer comprises at least 50% by weight of PA blocks chosen from: PA6, PA6.6, PA10.10, PA10.12, PA11, PA12, PA6/12, PA6/6.6, and mixtures thereof.

11. Composition according to any one of the preceding claims, in which said at least one copolymer is chosen from the following PEBAs: PA6-PEG, PA10.10-PEG, PA10.12-PEG, PA11-PEG, PA12-PEG, PA6/12-PEG, PA6.6-PEG, PA6/6.6-PEG, and mixtures thereof.

12. Composition according to any one of the preceding claims, **characterized in that** the weight-average molar mass of the copolymer is within the range from 100 000 to 200 000 g/mol, preferably from 100 000 to 180 000 g/mol, preferably from 100 000 to 160 000 g/mol.

13. Composition according to any one of the preceding claims, **characterized in that** the weight-average molar mass of said at least one polyol is within the range from 50 to 1000 g/mol.

14. Composition according to any one of the preceding claims, **characterized in that** said at least one polyol is chosen from: pentaerythritol, trimethylolpropane, trimethylolethane, trimethylolpropane, hexanetriol, diglycerol, methyl glucoside, tetraethanol, sorbitol, dipentaerythritol, cyclodextrin, polyether polyols comprising at least three hydroxyl groups, and mixtures thereof.

15. Composition according to any one of the preceding claims, **characterized in that** the melt viscosity thereof at 230°C (Pa.s) is greater than 400 Pa.s, preferably within the range from 400 to 2000 Pa.s, preferably within the range from 500 to 2000 Pa.s, measured according to standard ISO 1621-10: 2015.

16. Composition according to any one of the preceding claims, **characterized in that** it does not comprise polyolefin.

17. Composition according to any one of the preceding claims, **characterized in that** it also comprises at least one polyamide chosen from: PA12, PA11, PA10.10, PA6, PA6.6, PA6/12, a copolyamide comprising at least one of the following monomers: 6, 11, 12, 5.4, 5.9, 5.10, 5.12, 5.13, 5.14, 5.16, 5.18, 5.36, 6.4, 6.6, 6.9, 6.10, 6.12, 6.13, 6.14, 6.16, 6.18, 6.36, 10.4, 10.9, 10.10, 10.12, 10.13, 10.14, 10.16, 10.18, 10.36, 10.T, 12.4, 12.9, 12.10, 12.12, 12.13, 12.14, 12.16, 12.18, 12.36, 12.T, and mixtures or copolymers thereof.

18. Extrusion process **characterized in that** it uses an extrudable polymer composition according to any one of Claims 1 to 17, for manufacturing a film, a sheet, a membrane, a slab, a profiled element, a tube, a pipe, a hollow body, a tank, a synthetic casing, a cable, a rod, a filament, a fibre.

19. Extruded object manufactured according to the process of Claim 18, said object having a moisture vapour transmission rate (MVTR) of at least 700 g/m², preferably of at least 1000 g/m², preferably within the range from 1000 to 5000 g/m², per 24 hours at 23°C for a degree of relative humidity of 50% and a sample thickness of 30 µm, measured according to standard ASTM E96B.

20. Extruded object according to Claim 19, **characterized in that** it has a saturated water absorption at 23°C within the range from 50 to 500% by weight, preferably from 50 to 250%, preferably from 100 to 150% by weight, according to standard ISO 62:2008, relative to the weight of PEBA.

21. Object according to Claim 19 or 20, **characterized in that** it has a tensile modulus of elasticity of less than 500 MPa, preferably within the range from 10 to 200 MPa, preferably from 20 to 100 MPa, measured according to standard ISO 527-2:2012-1A.

22. Object according to any one of Claims 19 to 21, **characterized in that** it has an instantaneous hardness within the range from 20 to 60 Shore D, preferably from 30 to 50 Shore D, according to standard ISO 868:2003.

23. Object according to any one of Claims 19 to 22, said object being a packaging component, in particular in the agrifood sector, a food packaging film, a packaging film for cooking and/or smoking, in particular for sausages, a waterproof breathable film, in particular used in construction, a textile, sport equipment, shoe, sports shoe, shoe sole, decorative, luggage, spectacle, furniture, audio visual equipment, information technology, motor vehicle or aeronautical equipment component and/or a medical equipment component.

24. Use of a polymer composition according to any one of Claims 1 to 17, in an extrusion device for the manufacture of an object which is permeable to moisture vapour, as defined in any one of Claims 19 to 23.
